# EUROPEAN PATENT SPECIFICATION

(11) **EP 3 331 233 B1**
(45) Date of publication and mention of the grant of the patent: **05.05.2021**
(21) Application number: 16830350.1
(22) Date of filing: 15.07.2016
(51) Int. Cl.: H04N 1/46, B41J 21/00, G03G 15/00, G06T 1/00, H04N 1/60, H04N 1/409

(54) **IMAGE PROCESSING DEVICE**
BILDVERARBEITUNGSVORRICHTUNG
DISPOSITIF DE TRAITEMENT D'IMAGE

(30) Priority: 30.07.2015 JP 2015151348
(43) Date of publication of application: 06.06.2018
(73) Proprietor: KYOCERA Document Solutions Inc., Osaka-shi, Osaka 540-8585 (JP)
(72) Inventor: MURAMOTO, Hideya, Osaka-shi Osaka 540-8585 (JP)
(74) Representative: Winter, Brandl - Partnerschaft mbB
(86) International application number: PCT/JP2016/070971
(87) International publication number: WO 2017/018245

(56) References cited:
- JP-A- 2007 082 177
- JP-A- 2010 120 341
- JP-A- 2013 205 703
- US-A1- 2007 242 096
- US-A1- 2009 079 777
- US-A1- 2009 290 883
- US-A1- 2011 085 208

## Description

### Technical Field

The present invention relates to an image processing apparatus.

### Background Art

Some image forming apparatuses such as printers or multi function peripherals are capable of performing a toner saving process.

As a toner saving process, an image forming apparatus performs a gamma correction for an achromatic color part (i.e. a K signal) in a text document, and does not perform toner saving for an edge in a high density part but performs toner saving for an edge in a low density part (for example, see Patent Literature #1). Furthermore, detection of edge and non-edge portions of an image based on attributes of image data corresponding to image constitutional elements of the image is known (for example, see Patent Literature #2). Moreover, using different conversion tables having different conversion curves for different objects is known and generation of edge regions for edge data is known, while non-edge regions are not generated (for example, see Patent Literature #3). Also known is a method for controlling printer text/line art and halftone independently involving assigning a digital value representing marking information; changing the value of halftone pixels using a custom tone transfer function; rasterizing the digital image; reassigning the digital value of Text/Line pixels; and printing the image (see Patent Literature #4).

### Citation List

### Patent Literature

PATENT LITERATURE #1: Japanese Patent Application Publication No. 2008-219386.
PATENT LITERATURE #2: US 2009 079777 A1.
PATENT LITERATURE #3: US 2007 242096 A1
PATENT LITERATURE #4: US 2006 050317 A1

### Summary of Invention

### Technical Problem

However, in the aforementioned image processing apparatus, the toner saving is also not performed for a high-density edge other than a character (e.g. ruled line) even though image quality of such a high-density edge is not strongly affected by the toner saving, and consequently toner consumption amount is not adequately reduced.

The present invention has been conceived in view of the aforementioned problem. It is an object of the present invention to achieve an image processing apparatus that reduces a toner consumption amount with keeping readability of a character in a document.

### Solution to Problem

This object is solved by the subject matter of the independent claim. Further embodiments are disclosed in the subclaims.

### Advantageous Effect of Invention

According to the present invention, a toner consumption amount is reduced with keeping readability of a character in a document.

These and other objects, features and advantages of the present invention will become more apparent upon reading of the following detailed description along with the accompanied drawings.

### Brief Description of Drawings

Fig. 1 shows a block diagram that indicates a configuration of an image processing apparatus according to an embodiment of the present invention;
Fig. 2 shows a diagram that explains a classification of a pixel property performed by the property determining unit 23 shown in Fig. 1;
Fig. 3 shows a flowchart that explains a behavior of the image processing apparatus shown in Fig. 1; and
Fig. 4 shows a flowchart that explains the determination of a primary-scanning-directional property value (in Step S3) in detail.

### Description of Embodiments

Hereinafter, an embodiment of the present invention will be explained with reference to drawings.

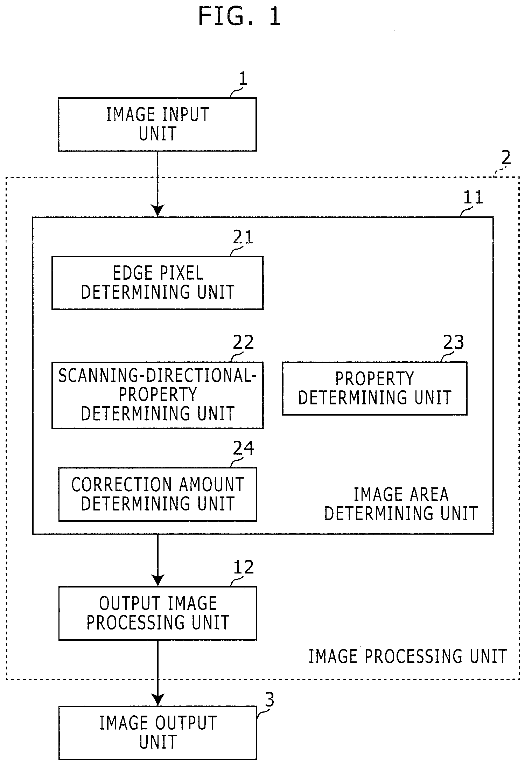

Fig. 1 shows a block diagram that indicates a configuration of an image processing apparatus according to an embodiment of the present invention. The image processing apparatus shown in Fig. 1 is, for example, an image forming apparatus such as a printer or a multi function peripheral.

The image processing apparatus shown in Fig. 1 includes an image input unit 1, an image processing unit 2, and an image output unit 3. The image input unit 1 includes for example a scanner, and optically scans a document image, generates image data of the document image, and outputs the image data to the image processing unit 2. The image processing unit 2 performs sorts of image processing for the image data inputted from the image input unit 1, and outputs to the image output unit 3 the image data for which the image processing has been performed. The image output unit 3 includes for example a print engine, and prints on a printing paper sheet an image based on the image data provided from the image processing unit 2.

The image processing unit 2 includes an image area determining unit 11 and an output image processing unit 12.

The image area determining unit 11 classifies each pixel in an input image into properties. The image area determining unit 11 includes an edge pixel determining unit 21, a scanning-directional-property determining unit 22, a property determining unit 23, and a correction amount determining unit 24.

The edge pixel determining unit 21 determines edge pixels in the input image. The edge pixel determining unit 21 extracts edge pixels (i.e. pixels in a range of two or three pixels from an edge on a high density side of the edge) from the input image, for example, using a Laplacian filter or the like.

The scanning-directional-property determining unit 22 determines a primary-scanning-directional-property value of each pixel on the basis of the number of edge pixels continuous along a primary scanning direction, and a secondary-scanning-directional-property value of each pixel on the basis of the number of edge pixels continuous along a secondary scanning direction. The primary-scanning-directional-property value is any of ruled-line edge, character edge and others, and the secondary-scanning-directional-property value is any of ruled-line edge, character edge and others.

The property determining unit 23 determines an edge pixel of a ruled-line edge among the edge pixels determined by the edge pixel determining unit 21. In addition, in this embodiment, the property determining unit 23 determines an edge pixel of a character edge among the determined edge pixels.

In this embodiment, the property determining unit 23 determines an edge pixel of a ruled-line edge on the basis of the primary-scanning-directional-property value and the secondary-scanning-directional-property value determined by the scanning-directional-property determining unit 22.

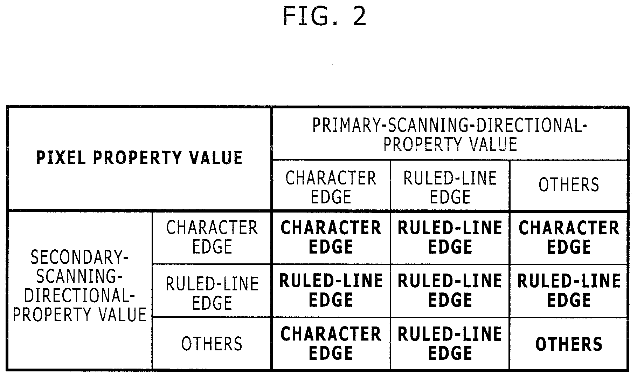

Fig. 2 shows a diagram that explains a classification of a pixel property performed by the property determining unit 23 shown in Fig. 1. Specifically, in Fig. 2, if a predetermined number (e.g. 10) of edge pixels or more are continuous along a primary scanning direction (i.e. if the primary-scanning-directional-property value is "ruled-line edge"), the property determining unit 23 sets properties of the continuous edge pixels as "ruled-line edge"; and if a predetermined number (e.g. 10) of edge pixels or more are continuous along a secondary scanning direction (i.e. if the secondary-scanning-directional-property value is "ruled-line edge"), the property determining unit 23 sets properties of the continuous edge pixels as "ruled-line edge". Further, the property determining unit 23 sets as "character edge" a property of an edge pixel other than the edge pixels of "ruled-line edge".

The correction amount determining unit 24 determines a correction amount on the basis of a property value determined by the property determining unit 23 for each pixel in the input image.

In this embodiment, the correction amount determining unit 24 determines a correction amount of a ruled-line edge to be larger than a correction amount of a character edge, and determines a correction amount of the others (i.e. non-edge pixel) to be larger than the correction amount of the ruled-line edge.

Further, the output image processing unit 12 performs image processing required for printing based on the image data. For example, the output image processing unit 12 performs for a character area an edge emphasis process using a differentiation filter or the like, and a color correction process, a black generation/UCR (Under Color Removal) process, a half-toning process and the like suitable to the character area; and performs for a half-tone dot area or a background area a smoothing process using an integration filter or the like, and a color correction process, a black generation/UCR process, an intermediate gradation, a half-toning process and the like suitable to the half-tone dot area or the background area. Consequently, a character part in a print image is made clear, and moire and/or noise are restrained in a halftone dot area.

Here the output image processing unit 12 adjusts intensity of this image processing in accordance with the aforementioned correction amount. The output image processing unit 12 performs this image processing so as to reduce a toner consumption amount of the target pixel more for the larger aforementioned correction amount. Specifically, after setting a value of a parameter in this image processing in accordance with the aforementioned correction amount, this image processing is performed.

For example, the output image processing unit 12 adjusts intensity of edge emphasis in accordance with the aforementioned correction amount. Specifically, the output image processing unit 12 reduces intensity of edge emphasis more for the larger aforementioned correction amount. Further, the output image processing unit 12 performs a half-toning process according to the aforementioned correction amount. In such a case, the output image processing unit 12 sets a dot size or a dot density of half toning dots after the half toning process to be smaller for the larger aforementioned correction amount.

Thus, the output image processing unit 12 performs the aforementioned image processing for the edge pixels so as to make a toner consumption amount of the edge pixel of the determined ruled-line edge smaller than a toner consumption amount of an edge pixel other than the edge pixel of the ruled-line edge. In this embodiment, the output image processing unit 12 performs the aforementioned image processing for the edge pixels so as to make a toner consumption amount of the edge pixel of the ruled-line edge smaller than a toner consumption amount of the edge pixel of the character edge. Further, in this embodiment, the output image processing unit 12 performs the aforementioned image processing for a pixel other than the edge pixels (i.e. gradation area, solid area other than an edge, or the like) in the input image so as to make a toner consumption amount of the pixel other than the edge pixels in the input image smaller than a toner consumption amount of the edge pixel of the ruled-line edge.

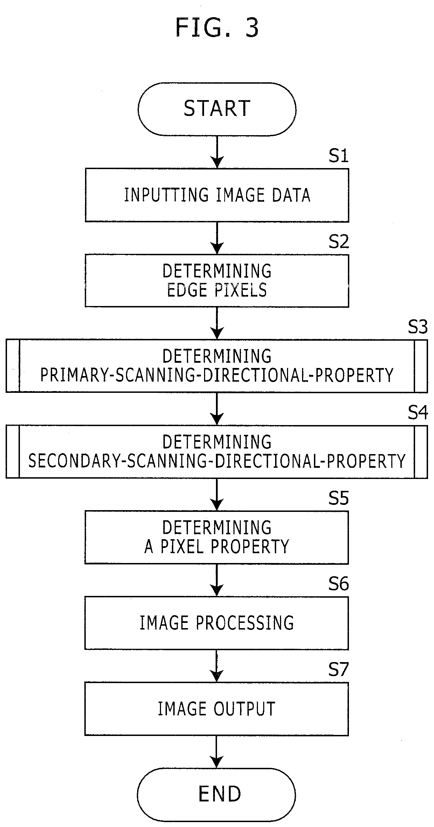

The following part explains a behavior of the aforementioned image processing apparatus. Fig. 3 shows a flowchart that explains a behavior of the image processing apparatus shown in Fig. 1.

Firstly, the image input unit 1 generates bitmap data of a document image, for example, scanned by an image scanner, and stores it in an unshown memory (in Step S1). In the image area determining unit 11, the edge pixel determining unit 21 determines edge pixels in an input image of one page (in Step S2).

Subsequently, the scanning-directional-property determining unit 22 determines a primary-scanning-directional-property value of each pixel in the input image (in Step S3) and determines a secondary-scanning-directional-property value of each pixel in the input image (in Step S4).

Subsequently, the property determining unit 23 determines a property value of each pixel in the input image on the basis of the primary-scanning-directional-property value and the secondary-scanning-directional-property value of this pixel (in Step S5).

In this manner, after the property value of each pixel is determined in the input image of one page, the correction amount of each pixel is determined, and the output image processing unit 12 performs the aforementioned image processing corresponding to the correction amount for each pixel (in Step S6). At that time, the output image processing unit 12 adjusts a parameter of the aforementioned image processing and performs the image processing for each pixel so as to make a toner consumption amount of an edge pixel of a ruled-line edge smaller than a toner consumption amount of an edge pixel of a character edge and so as to make a toner consumption amount of a non-edge pixel (i.e. gradation area, solid area other than an edge, or the like) smaller than a toner consumption amount of the edge pixel of the ruled-line edge. Subsequently, after finishing the image processing, the image processing unit 2 causes the image output unit 3 to perform printing of this input image (in Step S7).

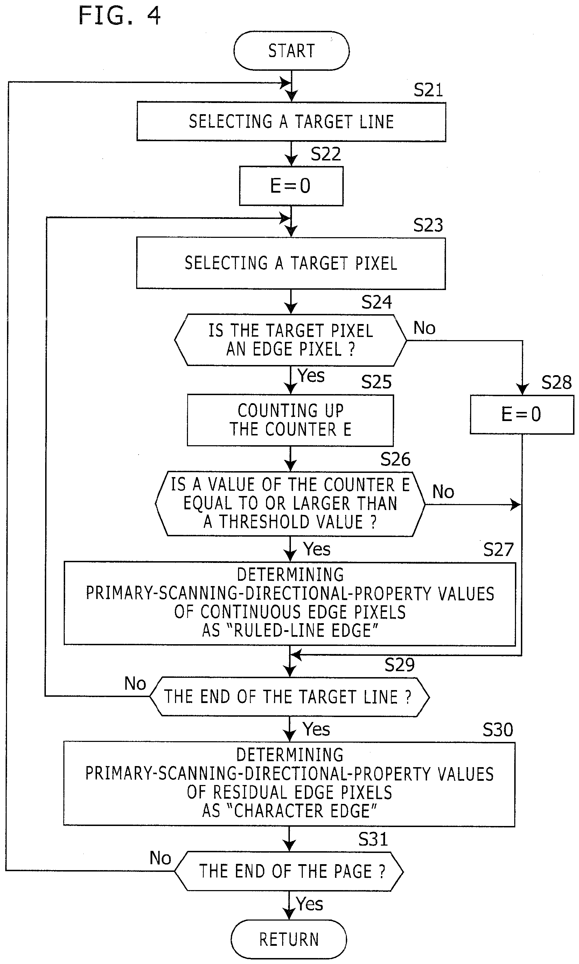

Here, the determination of the primary-scanning-directional-property value (in Step S3) is explained in detail. Fig. 4 shows a flowchart that explains the determination of a primary-scanning-directional-property value (in Step S3) in detail.

Firstly, the scanning-directional-property determining unit 22 selects a target line in the input image (in Step S21). In Step S21, the target line is selected in order from the top of one page of the input image.

Subsequently, the scanning-directional-property determining unit 22 initializes a value of a counter E that indicates the number of continuous edge pixels to zero (in Step S22).

The scanning-directional-property determining unit 22 selects a target pixel in the target line (in Step S23). In Step S23, the target pixel is selected in order from the top of the target line.

Subsequently, the scanning-directional-property determining unit 22 determines whether the target pixel is an edge pixel or not (in Step S24).

If the target pixel is an edge pixel, then the scanning-directional-property determining unit 22 increases a value of the counter E by 1 (in Step S25).

Subsequently, the scanning-directional-property determining unit 22 determines whether a value of the counter E is equal to or larger than a predetermined threshold value or not (in Step S26).

If a value of the counter E is equal to or larger than a predetermined threshold value, then the scanning-directional-property determining unit 22 determines as "ruled-line edge" primary-scanning-directional-property values of edge pixels continuous to the target pixel so as to make the number of the continuous edge pixels same as a value of the counter E. Contrarily, if a value of the counter E is less than the predetermined threshold value, then the scanning-directional-property determining unit 22 does not perform the determination of a primary-scanning-directional-property value of Step S27.

Meanwhile, if the target pixel is not an edge pixel in Step S24, then the scanning-directional-property determining unit 22 resets a value of the counter E to zero (in Step S28) .

Further, the scanning-directional-property determining unit 22 determines whether the target pixel is the last pixel of the target line or not (in Step S29).

If the target pixel is not the last pixel of the target line, then returning to Step S23, the scanning-directional-property determining unit 22 selects a pixel next to the current target pixel as a new target pixel, and performs the process as well.

Contrarily, If the target pixel is the last pixel of the target line, then the scanning-directional-property determining unit 22 determines as "character edge" a primary-scanning-directional-property value of an edge pixel other than edge pixels of a ruled-line edge in the target line (in Step S30).

Subsequently, the scanning-directional-property determining unit 22 determines whether the target line is the last line of the input image of one page or not (in Step S31) .

If the target line is not the last line, then returning to Step S21, the scanning-directional-property determining unit 22 selects a line next to the current target line as a new target line, and performs the process as well.

Contrarily, if the target line is the last line, then the scanning-directional-property determining unit 22 terminates the process of Step S3. A primary-scanning-directional-property value of a pixel other than the edge pixels is determined as "others".

As mentioned, the primary-scanning-directional-property values are determined.

The detail of the determination of the secondary-scanning-directional-property value (in Step S4) is identical or similar to the determination of the primary-scanning-directional-property value (in Step S3). However, as the target line, one column of 1-pixel width along the secondary scanning direction is selected in order.

Among the determination of the primary-scanning-directional-property value (in Step S3) and the determination of the secondary-scanning-directional-property value (in Step S4), whichever of them may be performed firstly or both of them may be performed parallely.

In the aforementioned embodiment, the edge pixel determining unit 21 determines edge pixels in an input image, and the property determining unit 23 determines an edge pixel of a ruled-line edge among the determined edge pixels. The output image processing unit 12 performs predetermined image processing for the edge pixels so as to make a toner consumption amount of the edge pixel of the ruled-line edge smaller than a toner consumption amount of an edge pixel other than the edge pixel of the ruled-line edge.

Consequently, a toner consumption amount of a ruled-line edge is reduced not so as to reduce a toner consumption amount of a character edge, and consequently, a toner consumption amount is reduced with keeping readability of a character in a document. It should be noted that reduction of a toner consumption amount of a ruled-line edge does not strongly affect readability of the ruled line.

It should be understood that various changes and modifications to the embodiments described herein will be apparent to those skilled in the art. Such changes and modifications may be made without departing from the scope of the present invention, which is defined by the claims, and without diminishing its intended advantages.

### Industrial Applicability

For example, the present invention can be applied to an image processing apparatus such as a digital multi function peripheral or an image scanner.

## Claims

1. An image processing apparatus, comprising:
an edge pixel determining unit (21) that determines edge pixels in an input image;
a scanning-directional-property determining unit (22) that determines, based on the number of edge pixels continuous in a predetermined scanning direction, a property value of an edge pixel, **characterized by** further comprising a property determining unit (23) that classifies, depending on the determined property value, the edge pixel as being an edge pixel of a ruled-line edge or not; and
an output image processing unit (12) that performs predetermined image processing for the edge pixels so as to make a toner consumption amount of the edge pixel that has been classified as an edge pixel of the ruled-line edge smaller than a toner consumption amount of an edge pixel that has been classified as an edge pixel other than the edge pixel of the ruled-line edge.

2. The image processing apparatus according to claim 1, wherein the property determining unit (23) classifies, depending on the determined property value, the edge pixel as being an edge pixel of a character edge; and
the output image processing unit (12) performs predetermined image processing for the edge pixels so as to make a toner consumption amount of the edge pixel that has been classified as an edge pixel of the ruled-line edge smaller than a toner consumption amount of the edge pixel that has been classified as an edge pixel of the character edge.

3. The image processing apparatus according to claim 2, wherein if a predetermined number of edge pixels or more are continuous along a primary scanning direction as a predetermined scanning direction, the property determining unit (23) sets properties of the continuous edge pixels as ruled-line edge; if a predetermined number of edge pixels or more are continuous along a secondary scanning direction as a predetermined scanning direction, the property determining unit (23) sets properties of the continuous edge pixels as ruled-line edge; and the property determining unit (23) sets a property of an edge pixel other than the edge pixels of the ruled-line edge as character edge.

4. The image processing apparatus according to claim 1, wherein the output image processing unit (12) performs predetermined image processing for a pixel other than the edge pixels in the input image so as to make a toner consumption amount of the pixel other than the edge pixels in the input image smaller than a toner consumption amount of the edge pixel that has been classified as an edge pixel of the ruled-line edge.

## Patentansprüche

1. Bildverarbeitungsvorrichtung, die aufweist:
eine Kantenpixel-Bestimmungseinheit (21), die Kantenpixel in einem Eingabebild bestimmt,
eine Abtastrichtungseigenschaft-Bestimmungseinheit (22), die basierend auf der Anzahl von Kantenpixeln, die in einer vorbestimmten Abtastrichtung kontinuierlich sind, einen Eigenschaftswert eines Kantenpixels bestimmt,
**dadurch gekennzeichnet, dass** die Bildverarbeitungsvorrichtung des Weiteren aufweist:
eine Eigenschaftsbestimmungseinheit (23), die abhängig von dem bestimmten Eigenschaftswert das Kantenpixel als ein Kantenpixel einer Regellinienkante klassifiziert oder nicht, und
eine Ausgabebildverarbeitungseinheit (12), die eine vorbestimmte Bildverarbeitung für die Kantenpixel durchführt, um eine Tonerverbrauchsmenge des Kantenpixels, die als ein Kantenpixel der Regellinienkante klassifiziert worden sind, kleiner als eine Tonerverbrauchsmenge eines Kantenpixels, das als ein Kantenpixel abgesehen von dem Kantenpixel der Regellinienkante klassifiziert worden ist, zu machen.

2. Bildverarbeitungsvorrichtung gemäß Anspruch 1, wobei
die Eigenschaftsbestimmungseinheit (23) abhängig von dem bestimmten Eigenschaftswert das Kantenpixel als ein Kantenpixel einer Zeichenkante klassifiziert, und
die Ausgabebildverarbeitungseinheit (12) eine vorbestimmte Bildverarbeitung für die Kantenpixel durchführt, um eine Tonerverbrauchsmenge des Kantenpixels, das als ein Kantenpixel der Regellinienkante klassifiziert worden ist, kleiner als eine Tonerverbrauchsmenge des Kantenpixels, das als ein Kantenpixel der Zeichenkante klassifiziert worden ist, zu machen.

3. Bildverarbeitungsvorrichtung gemäß Anspruch 2,
wobei, wenn eine vorbestimmte Anzahl von Kantenpixeln oder mehr entlang einer primären Abtastrichtung als einer vorbestimmten Abtastrichtung kontinuierlich ist, die Eigenschaftsbestimmungseinheit (23) Eigenschaften der kontinuierlichen Kantenpixel als Regellinienkante festsetzt,
wobei, wenn eine vorbestimmte Anzahl von Kantenpixeln oder mehr entlang einer sekundären Abtastrichtung als einer vorbestimmten Abtastrichtung kontinuierlich ist, die Eigenschaftsbestimmungseinheit (23) Eigenschaften der kontinuierlichen Kantenpixel als Regellinienkante festsetzt, und
wobei die Eigenschaftsbestimmungseinheit (23) eine Eigenschaft eines Kantenpixels abgesehen von den Kantenpixeln der Regellinienkante als Zeichenkante festsetzt.

4. Bildverarbeitungsvorrichtung gemäß Anspruch 1, wobei die Ausgabebildverarbeitungseinheit (12) eine vorbestimmte Bildverarbeitung für ein Pixel abgesehen von den Kantenpixeln in dem Eingabebild durchführt, um eine Tonerverbrauchsmenge des Pixels abgesehen von den Kantenpixeln in dem Eingabebild kleiner als eine Tonerverbrauchsmenge des Kantenpixels, das als ein Kantenpixel der Regellinienkante klassifiziert worden ist, zu machen.

## Revendications

1. Appareil de traitement d'image, comprenant :
une unité de détermination de pixels de bord (21) qui détermine des pixels de bord dans une image d'entrée ;
une unité de détermination de propriété de direction de balayage (22) qui détermine, sur la base du nombre de pixels de bord continus dans une direction de balayage prédéterminée, une valeur de propriété d'un pixel de bord, **caractérisé en ce qu'**il comprend en outre une unité de détermination de propriété (23) qui classe, en fonction de la valeur de propriété déterminée, le pixel de bord comme étant ou non un pixel de bord d'un bord de ligne réglée ; et
une unité de traitement d'image de sortie (12) qui met en œuvre un traitement d'image prédéterminé pour les pixels de bord, afin de rendre une quantité de consommation de toner du pixel de bord, qui a été classé comme étant un pixel de bord du bord de ligne réglée, plus petite qu'une quantité de consommation de toner d'un pixel de bord qui a été classé comme étant un pixel de bord distinct du pixel de bord du bord de ligne réglée.

2. Appareil de traitement d'image selon la revendication 1, dans lequel l'unité de détermination de propriété (23) classe, en fonction de la valeur de propriété déterminée, le pixel de bord comme étant un pixel de bord d'un bord de caractère ; et
l'unité de traitement d'image de sortie (12) met en œuvreun traitement d'image prédéterminé pour les pixels de bord de manière à rendre une quantité de consommation de toner, du pixel de bord qui a été classé comme étant un pixel de bord du bord de ligne réglée, plus petite qu'une quantité de consommation de toner du pixel de bord qui a été classé comme étant un pixel de bord du bord de caractère.

3. Appareil de traitement d'image selon la revendication 2, dans lequel, si un nombre prédéterminé de pixels de bord, ou plus, est continu le long d'une direction de balayage primaire, en tant qu'une direction de balayage prédéterminée, l'unité de détermination de propriété (23) définit des propriétés des pixels de bord continus en tant que bord de ligne réglée ; si un nombre prédéterminé de pixels de bord, ou plus, est continu le long d'une direction de balayage secondaire, en tant qu'une direction de balayage prédéterminée, l'unité de détermination de propriété (23) définit des propriétés des pixels de bord continus en tant que bord de ligne réglée ; et l'unité de détermination de propriété (23) définit une propriété d'un pixel de bord distinct des pixels de bord du bord de ligne réglée, en tant que bord de caractère.

4. Appareil de traitement d'image selon la revendication 1, dans lequel l'unité de traitement d'image de sortie (12) met en œuvreun traitement d'image prédéterminé pour un pixel distinct des pixels de bord dans l'image d'entrée, de manière à rendre une quantité de consommation de toner, du pixel distinct des pixels de bord dans l'image d'entrée, plus petite qu'une quantité de consommation de toner du pixel de bord qui a été classé comme étant un pixel de bord du bord de ligne réglée.
